# EUROPEAN PATENT APPLICATION

(11) **EP 3 376 403 A1**
(43) Date of publication of application: **19.09.2018**
(21) Application number: 16880753.5
(22) Date of filing: 26.10.2016
(51) Int. Cl.: G06F 17/30

(54) **METHOD OF ACCESSING DISTRIBUTED DATABASE AND DEVICE PROVIDING DISTRIBUTED DATA SERVICE**

(30) Priority: 31.12.2015 CN 201511031131
(71) Applicant: Huawei Technologies Co., Ltd., Longgang District Shenzhen, Guangdong 518129 (CN)
(72) Inventor: LI, Zhenfeng, Shenzhen Guangdong 518129 (CN); LU, Yuanyuan, Shenzhen Guangdong 518129 (CN); HAN, Jianzhong, Shenzhen Guangdong 518129 (CN)
(74) Representative: Gill Jennings & Every LLP
(86) International application number: PCT/CN2016/103405
(87) International publication number: WO 2017/113962

(57) **Abstract**

Embodiments of this application relate to the database field, and in particular, to a method for accessing a distributed database, including: receiving a first access request sent by an application server, where the first access request includes a table name of the first data table and a key value of the first data table; finding, according to the table name of the first data table, that the first data table is a replication table and a first access rule corresponding to the replication table, where the replication table is a same data table stored in multiple database servers; determining a database server that is corresponding to the key value and in the first access rule as a first database server that is preferentially accessed; and sending the first access request to the first database server. Therefore, distributed database access performance is greatly improved.

## Description

This application claims priority to Chinese Patent Application No. 201511031131.7, filed with the Chinese Patent Office on December 31, 2015 and entitled "METHOD FOR ACCESSING DISTRIBUTED DATABASE AND DISTRIBUTED DATA SERVICE APPARATUS", which is incorporated herein by reference in its entirety.

### TECHNICAL FIELD

This application relates to the field of database technologies, and in particular, to a technology for accessing a distributed database.

### BACKGROUND

For a distributed database system, different types of data may be distributed in different databases. For example, Table A is stored in one database, and Table B is stored in another database. In this case, if Table A and Table B need to be accessed, it may be necessary to perform cross-database association access.

Currently, a method using a replication table may be used to resolve a problem of cross-database association in the distributed database system. The replication table herein is a same data table stored on multiple database servers. Simply, one data table is simultaneously stored on multiple database servers.

If data in the replication table needs to be updated, a current common practice is to synchronously update the replication tables on the multiple database servers. However, due to a data consistency requirement, in this data update manner, an update processing request needs to be sent to all database servers on which the replication table is located, and only when all the database servers on which the replication table is located successfully update data, the data in the replication table is successfully updated. If data on a database server on which the replication table is located fails to be updated, the current data update fails. Therefore, performance and reliability are low in this manner.

### SUMMARY

Embodiments of the present invention provide a method for accessing a distributed database and a distributed data service apparatus, so as to improve performance and reliability of accessing a distributed database.

According to one aspect, an embodiment of this application provides a method for accessing a distributed database. The method includes: receiving, by a database middleware, a first access request (such as an add request, a delete request, a modify request, or a query request) sent by an application server, where the first access request includes a table name of a first data table and a key value of the first data table (usually, the first access request may further include an access action, such as query, delete, modify, or add), and a database server on which the data table is preferentially accessed may be found by using the key value; finding, by the database middleware according to the table name of the first data table, that the first data table is a replication table and a first access rule corresponding to the replication table (for example, a query may be performed by using access rule content and a data table access rule relationship), where the replication table herein is a same data table stored on multiple database servers; determining, by the database middleware, a database server that is corresponding to the key value and in the first access rule as a first database server that is preferentially accessed; and sending, by the database middleware, the first access request to the first database server. According to a partition priority access read/write policy, an access request (in particular, a write operation, such as add, delete, and modify) is usually only sent to a database server corresponding to a priority key value for processing, and another replication table is not related. Another partition is used to process the access request only when the database server corresponding to the priority key value is faulty. Therefore, database access performance is greatly improved.

In a possible design, before sending the first access request to the first database server, the database middleware determines that the first database server is faulty or is disconnected from a network, and the database middleware sends the first access request to any one of all database servers that store the replication table except the first database server. As analyzed above, according to the partition access priority read/write policy, in a normal case, a write operation is performed only in a data replication table in a place in which a customer ID card is issued. However, when a database in the place in which the ID card is issued is faulty, the middleware randomly selects a replication table on another partition for update, and a service is performed as usual. Therefore, a single point of failure problem is resolved.

In a possible design, after a synchronization device determines that the first database server processes the access request, and data included in the first data table changes, the synchronization device sends the first access request to all the database servers that store the replication table except the first database server. After the data is updated, the synchronization device updates the updated data to another replication table, so that a single point of failure problem of updating multiple replication tables is avoided, and real-time quality of data reading is improved.

In a possible design, the database middleware receives a second access request sent by the application server, where the second access request includes a table name of a second data table, a table name of a third data table, and a key value of the second data table; the database middleware finds that the second data table is a partition table and a second access rule of the partition table according to the table name of the second data table, where the partition table is a data table in which data is dispersedly and uniquely stored on multiple database servers according to a partition rule, and the partition table has a same table name and table structure on the multiple database servers; the database middleware determines, according to the key value of the second data table and the second access rule, a second database server that stores a partition table corresponding to the partition key value; the database middleware finds that the second data table is a replication table and a third access rule according to the table name of the third data table, and determines, from the third access rule, that the second database server stores the second data table, or determines, from the third access rule, all database servers that store the second data table; and when all the database servers that store the second data table include the second database server, the database middleware sends the second access request to the second database server.

In a possible design, the database middleware finds that the second data table is a replication table and a third access rule, and determines, from the third access rule, that the second database server does not store the second data table, or determines, from the third access rule, all database servers that store the second data table; and when all the database servers that store the second data table do not include the second database server, the database middleware performs a cross-database association operation.

In another aspect, an embodiment of this application provides a method for accessing a distributed database, where the method includes: receiving, by a database middleware, an access request sent by an application server, where the access request includes a table name of a first data table, a table name of a second data table, a key value of the first data table, and a key value of the second data table; finding, according to the table name of the first data table, that the first data table is a replication table and a first access rule corresponding to the first data table, where the replication table is a same data table stored on multiple database servers; determining, according to the table name of the second data table, that the second data table is a replication table and a second access rule corresponding to the second data table; and when the first access rule and the second access rule are the same, determining, from the first access rule or the second access rule, a database server corresponding to the key value of the first data table or the key value of the second data table as a first database server that is preferentially accessed; and sending the first access request to the first database server.

In a possible design, when the first access rule and the second access rule are different, the database middleware determines, from the first access rule, all database servers that store the first data table, and determines, from the second access rule, all database servers that store the second data table; and when determining that there are one or more same database servers in all the database servers that store the first data table and all the database servers that store the second data table, determines any one of the one or more same database servers as a second database server that is preferentially accessed; and sends the first access request to the second database server.

In a possible design, when the database middleware determines that there is no same database server in all the database servers that store the first data table and all the database servers that store the second data table, the database middleware performs a cross-database association operation.

According to another aspect, an embodiment of this application provides a distributed data service apparatus, where the apparatus has a function of implementing the database middleware in the foregoing method embodiment, and the function may be implemented by using hardware or may be implemented by using software executed by hardware. The hardware or the software includes one or more modules corresponding to the foregoing function. The distributed data service apparatus may be applied to a scenario in which the access request includes only the table name of the replication table, or may be applied to a scenario in which the access request includes only the table name of the replication table and the table name of the partition table, or may be applied to a scenario in which the access request includes only table names of two or more replication tables, or may be applied to all the foregoing scenarios.

According to still another aspect, an embodiment of this application provides a computer storage medium, configured to store a computer software instruction used by the database middleware, and the computer software instruction includes a program designed to perform the foregoing aspect. The database middleware may be applied to a scenario in which the access request includes only the table name of the replication table, or may be applied to a scenario in which the access request includes only the table name of the replication table and the table name of the partition table, or may be applied to a scenario in which the access request includes only table names of two or more replication tables, or may be applied to all the foregoing scenarios. Compared with the prior art, in the solutions provided in the present invention, an access request (in particular, a write operation, such as add, delete, and modify) is usually only sent to a database server corresponding to a priority key value for processing, and another replication table is not related. Another partition is used to process the access request only when the database server corresponding to the priority key value is faulty. Therefore, database access performance is greatly improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 shows a schematic diagram of a possible system network according to an embodiment of the present invention;
FIG. 2 shows a schematic diagram of a system according to an embodiment of the present invention;
FIG. 3 shows a schematic diagram of a computer device according to an embodiment of the present invention;
FIG. 4 shows a schematic flowchart of a method for accessing a database according to an embodiment of the present invention;
FIG. 5 shows a schematic structural diagram of a distributed data service device according to an embodiment of the present invention; and
FIG. 6 shows a schematic structural diagram of a distributed data service device according to an embodiment of the present invention.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

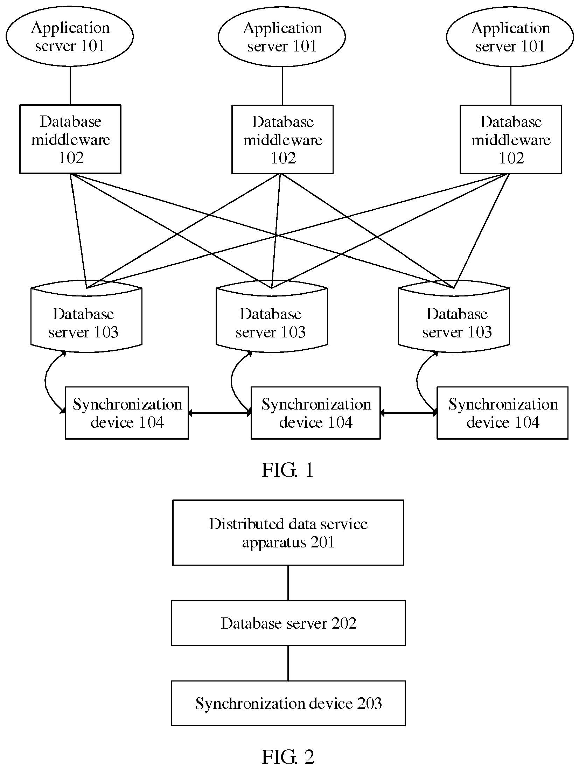

As shown in FIG. 1, FIG. 1 is a simple framework diagram of a system of accessing a distributed database according to an embodiment of the present invention. The system includes an application server 101, a database middleware 102, a database server 103, and a synchronization device 104. An application server 101 and a database server 103 are disposed in each of a place A, a place B, and a place C, and there is a one-to-one correspondence between the application server 101 and the database middleware 102. The application server 101 is configured to process some specific services. When the application server 101 needs to access data in a data table stored on the database server 103, the application server 101 accesses a database server 103 by using a database middleware 102 corresponding to the application server 101. After data in a replication table stored on a database server 103 is updated, an update operation request is sent to other database servers 103 by using a synchronization device 104 corresponding to the database server 103, so that all other database servers 103 also synchronously update the data. In FIG. 1, each place is provided with one application server and one database server. In actual application, multiple application servers and database servers may be disposed. This is not limited herein.

Multiple data tables are stored on each database server, and there are usually two typical types of data tables: a partition table and a replication table. If some excessively large data tables are stored on one database server, the database server may be centrally accessed. Consequently, load of the database server is over-high and performance deteriorates. Currently, data in the large data table may be dispersedly and uniquely stored on multiple database servers according to a partition rule to form multiple small data tables. Logically, these small data tables together still form a large data table. The multiple small data tables obtained through partitioning are referred to as partition tables. In this embodiment of the present invention, sometimes the database server may also be referred to as a partition or a database.

When partitioning a large data table or large data, the database server dispersedly and uniquely stores the data on multiple database servers according to the partition rule. Partition tables on the multiple database servers have a same table name and a same table structure, and a union set of data in the partition tables forms complete table data. That is, the partition tables are tables that are with a same table name and structure of a data table and stored on the multiple database servers, and the data of the partition table is dispersedly and uniquely stored on one of the multiple database servers. Partitioning is specific to a table, that is, data is distributed to different database servers by using a specific partition rule. A partition field is a table field for performing a function operation when data table records are stored in different databases. If a partition key value of a partition table belongs to a range of a specific partition interval value, the partition table is stored on a database server corresponding to the partition interval.

In a distributed database system, there is another type of table that is often used to perform an association operation with another table, for example, the association operation may be JOIN. In particular, an association operation needs to be performed between this type of table and a partition table, and this type of table is not large, such as a system parameter table, a resource table, or a product table. If this type of table is stored alone on a database server, when a table on another database server needs to be associated with the table, an association operation needs to be performed across database servers. Consequently, performance of the database server is extremely low. If one copy is stored on each database server that needs to perform an association operation, an operation across database servers can be avoided. Because a same data table copy is stored on multiple database servers, this type of table is referred to as a replication table. That is, the replication table is a same data table stored on multiple database servers, and complete data can be obtained from any database server. In some cases, the replication table stored on the database server may also be referred to as a copy of the replication table. If a priority key value of a replication table belongs to a range of a specific partition interval value, a replication table stored on a database server corresponding to the partition interval value is preferentially accessed, and only when the database server corresponding to the partition interval cannot be accessed, another database server that stores the replication table is accessed.

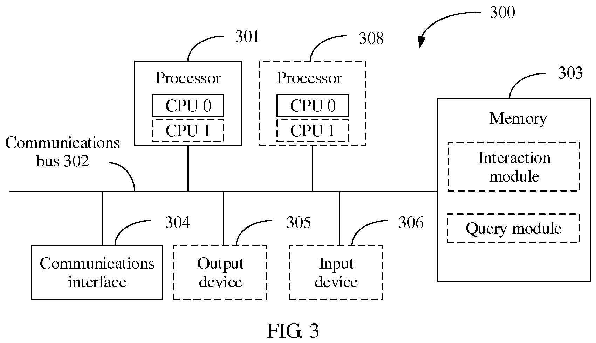

As shown in FIG. 2, a system of accessing a distributed database that is provided in the present invention may include one or more distributed data service apparatuses 201, one or more database servers 202, and one or more synchronization apparatuses 203. The distributed data service apparatus 201 herein may be the database middleware 102 in FIG. 1. In this embodiment of the present invention, the database middleware and the distributed data service apparatus are the same. Some content describes the database middleware, and some content describes the distributed data service apparatus. The synchronization apparatus 203 may be a standalone device, or may be a component of the distributed data service apparatus 201. As shown in FIG. 2, the distributed data service apparatus 201 in FIG. 2 may be implemented by using a computer device (or a system) in FIG. 3.

FIG. 3 shows a schematic diagram of a computer device according to an embodiment of the present invention. A computer device 300 includes at least one processor 301, a communications bus 302, a memory 303, and at least one communications interface 304.

The processor 301 may be a general-purpose central processing unit (CPU), a microprocessor, an application-specific integrated circuit (application-specific integrated circuit, ASIC), or one or more integrated circuits configured to control program execution of the solution of the present invention.

The communications bus 302 may include a channel used to transfer information between the foregoing components. The communications interface 404 is any device such as a transceiver, and is configured to communicate with another device or a communications network, such as Ethernet, a radio access network (RAN), or a wireless local area network (Wireless Local Area Networks, WLAN).

The memory 303 may be a read-only memory (read-only memory, ROM), another type of a static storage device that can store static information and instructions, a random access memory (random access memory, RAM), or another type of a dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM), another compact disc storage, an optical disc storage (including a compact disc, a laser disc, an optical disc, a digital versatile disc, a Blue-ray disc, and the like), a disk storage medium, another magnetic storage device, or any other medium that can be configured to carry or store expected program code in a form of an instruction or a data structure and that can be accessed by a computer; however, the memory 303 is not limited thereto. The memory may be a separate memory and is connected to the processor by using the bus, or the memory may be integrated with the processor.

The memory 303 is configured to store application program code used to execute the solution of the present invention, and execution of the application program code is controlled by the processor 301. The processor 301 is configured to execute the application program code stored in the memory 303.

In a specific implementation, in an embodiment, the processor 301 may include one or more CPUs, such as a CPU 0 and a CPU 1 in FIG. 3.

In a specific implementation, in an embodiment, the computer device 300 may include multiple processors, such as the processor 301 and a processor 308 in FIG. 3. Each of these processors may be a single-core processor, or may be a multi-core processor. The processor herein may refer to one or more devices, circuits, and/or processing cores configured to process data (for example, a computer program instruction).

In a specific implementation, in an embodiment, the computer device 300 may further include an output device 305 and an input device 306. The output device 305 communicates with the processor 301, and may display information in multiple manners. For example, the output device 305 may be a liquid crystal display (liquid crystal display, LCD), a light emitting diode (light emitting diode, LED) display device, a cathode-ray tube (cathode ray tube, CRT) display device, or a projector (projector). The input device 306 communicates with the processor 301, and may receive input of a user in multiple manners. For example, the input device 306 may be a mouse, a keyboard, a touchscreen device, or a sensing device.

The computer device 300 may be a general-purpose computer device or a special-purpose computer device. In a specific implementation, the computer device 300 may be a desktop computer, a portable computer, a network server, a personal digital assistant (Personal Digital Assistant, PDA, a mobile phone, a tablet computer, a wireless terminal device, a communications device, an embedded device, or a device that has a similar structure to that in FIG. 3. A type of the computer device 300 is not limited in this embodiment of the present invention.

The distributed data service apparatus shown in FIG. 2 may be the device shown in FIG. 3. The memory of the distributed data service apparatus 201 stores one or more software modules (such as an interaction module and a query module). The distributed data service apparatus 201 may implement the software module by using the processor and the program code in the memory, so as to implement data access to the distributed database.

The following further describes in detail this embodiment of the present invention based on the foregoing described common aspect related to the present invention.

In this embodiment of the present invention, a replication table may be read/written according to a partition access priority read/write policy. The so-called partition access priority read/write policy indicates that an access request for the replication table is sent, according to a key value, to a database server corresponding to the key value for processing, and only when the partition is faulty, the access request is sent to another partition.

In a scenario in which a JOIN association operation is performed between a replication table and a partition table, a replication table in a database in which the partition table is located is still used, that is, a nearest-read policy is used. For a data update operation, only a replication table corresponding to a partition route is updated, and then the replication table in another partition is updated by using a synchronization device.

The method for assessing a distributed database provided in this embodiment of the present invention includes three processes: specifically defining an access rule, setting a correspondence between a data table and the access rule, and accessing the data table. In this embodiment of the present invention, accessing the data table includes operations, such as adding, deleting, changing, and querying data in the data table. The following separately describes the three processes, and a process of defining the access rule is first described. The distributed data service apparatus 201 processes all of the processing processes of specifically defining the access rule, setting the correspondence between the data table and the access rule, and accessing the data table.

Before the access rule is defined, system personnel may create, on a database server, various types of data tables and initialize data by using a professional tool. Creation of the data table is a basic technology in the art, and is not described herein. To conveniently describe the solution in this embodiment of the present invention, the following lists four typical tables in a telecommunications system for description, and the four tables are respectively a customer table, a customer order relationship table, a system parameter definition table, and a product table. It should be noted that the four tables are merely used to describe the solution of the present invention, and the solution of the present invention is not limited to only the four tables in the telecommunications field. The technical solution in this embodiment of the present invention is applicable to a distributed database system in any scenario.

The customer table records customer identity information, and the customer table may include an ID card number, a customer name, a customer address, and a customer email address. As shown in Table 1, in actual application, the customer table may include various types of data, and is not limited to the foregoing data. Table 1 may be represented as tbl_customer (custId, custmName, address, email).

**Table 1**

| **Field name** | **Field description** |
|---|---|
| custId | Customer ID card number |
| custmName | Customer name |
| address | Customer address |
| email | Customer email address |

The customer relationship table records information about a mobile number ordered by a customer, and the customer relationship table may include: a customer ID card number, the mobile number ordered by the customer, and a time of ordering the mobile number. As shown in Table 2, in actual application, the customer relationship table may include various types of data, and is not limited to the foregoing data. Table 2 may be represented as tbl_cust_order (custId, mdn, time).

**Table 2**

| **Field name** | **Field description** |
|---|---|
| custId | Customer ID card number |
| Mdn | Mobile number ordered by a customer |
| Time | Time of ordering the mobile number |

The system parameter table records system parameter information, and the system parameter table may include a parameter name, a parameter description, a parameter type, a parameter value, and an effective parameter version. As shown in Table 3, in actual application, the system parameter table may include various types of data, and is not limited to the foregoing data. Table 3 may be represented as tbl_sys_parameter (parametername, parameterdes, parametertype, parametervalue, parametervesion).

**Table 3**

| **Field name** | **Field description** |
|---|---|
| parametername | Parameter name |
| parameterdes | Parameter description |
| parametertype | Parameter type |
| parametervalue | Parameter value |
| parametervesion | Effective parameter version |

The product table records related information of a product, and the product table may include a product ID, a product name, a product description, and an effective product time. As shown in Table 4, in actual application, the product table may include various types of data, and is not limited to the foregoing data. Table 4 may be represented as tbl_product (productId, productname, productdes, producttime).

**Table 4**

| **Field name** | **Field description** |
|---|---|
| productID | Product ID |
| productname | Product name |
| productdes | Product description |
| producttime | Effective product time |

The following describes four types of access rules.

Specifically, an access rule 1 indicates that a replication table is accessed according to a priority routing policy; an access rule 2 indicates that a partition table is accessed according to a partition routing policy; an access rule 3 indicates that a data table is accessed according to a multi-write policy; and an access rule 4 indicates that a data table is accessed according to a master write policy. The four types of access rules herein are mainly for access to one separate data table in one request. If association access to two or more data tables is related, the four types of access rules and a principle of a cross-database association operation are combined to implement an access process of the data tables.

A process of defining each access rule by a database middleware specifically includes: The database middleware receives an access rule definition request, where the access rule definition request includes an access rule name and access rule content; and
the database middleware stores a correspondence between the access rule name and the access rule content according to the access rule name and the access rule content.

The access rule content specifies a manner in which the database middleware may access the data table, that is, the database middleware may learn, by using the access rule content, a database server to which an access request is to be sent. In some cases, the access rule content may further include a correspondence between a partition interval value and a database server name. For example, for the access rule 1, a range of a specific partition interval value within which a priority key value carried in the access request falls is determined, then a database server name corresponding to the partition interval value is found, and the access request is sent to the database server. For the access rule 2, a range of a specific partition interval value within which a priority key value carried in the access request falls is determined, then a database server name corresponding to the partition interval is found, and the access request is sent to the database server.

In actual application, the access rule definition request may be specifically an SQL statement. The access rule definition request may come from a terminal of a system administrator, or may come from client software of the database middleware. This is not limited herein. It should be noted that the access rule name may be a specific access rule name, or an access rule name abbreviation, or an access rule code. This is not limited herein. A partitioned database name may be a specific partitioned database name, or a partitioned database name abbreviation, or a partitioned database code. This is not limited herein.

It is assumed that for the rule 1, the rule content is a partition access priority read/write policy, that is, priority access partition routing is performed according to a priority key value. If the priority key value belongs to a range of a partition interval value ["3201", "3201"], a replication table on a database server PI is accessed; if the priority key value belongs to a range of a partition interval value ["3202", "3202"], a replication table on a database server P2 is accessed, and so on. In this case, the access rule definition request is specifically as follows:

```
CREATE SHARDRULE rule1
ACCESS PARTITION BY RANGE
(
INTERVAL ["3201", "3201"] ON PI,
INTERVAL ["3202", "3202"] ON P2,
INTERVAL ["3205", "3205"] ON P3,
);
```

It is assumed that for the rule 2, the rule requires performing range partition routing according to a partition key value. If the partition key value belongs to a range of a partition interval value ["1377010", "1377099"], a partition table in a partitioned database PI is accessed; if the partition key value belongs to a range of a partition interval value ["1390150", "1390159"], a partition table in a partitioned database P2 is accessed, and so on. In this case, the access rule definition request is specifically as follows:

```
CREATE SHARDRULE rule2
SHARDING BY RANGE
(
INTERVAL ["1377010", "1377099"] ON PI,
INTERVAL ["1390150", "1390159"] ON P2,
INTERVAL ["1595110", "1595199"] ON P3,
);
```

The database middleware stores access rule content that includes the rule name, a rule type, and a correspondence between a range of a partition interval value and a partitioned database name, and the access rule content may be stored in a form of a table shown in Table 5. Certainly, the access rule content may be stored in another form, for example, a file form.

**Table 5**

| **Rule name** | **Table type** | **Rule type** | **Range of a partition interval value** | **Partitioned database server name** |
|---|---|---|---|---|
| rule 1 | Replication table | Rule for preferentially accessing the replication table by partition (access partition) | ["3201", "3201"] | PI |
| rule 1 | Replication table | Rule for preferentially accessing the replication table by partition (access partition) | ["3202", "3202"] | P2 |
| rule 1 | Replication table | Rule for preferentially accessing the replication table by partition (access partition) | ["3205", "3205"] | P3 |
| rule 2 | Partition table | Rule for accessing the partition table by range (sharding by range) | ["1377010", "1377099"] | P1 |
| rule 2 | Partition table | Rule for accessing the partition table by range (sharding by range) | ["3202", "3202"] | P2 |
| rule 2 | Partition table | Rule for accessing the partition table by range (sharding by range) | ["3205", "3205"] | P3 |

A process of setting the correspondence between the data table and the access rule is subsequently described, and the process is performed in the database middleware. The database middleware receives a correspondence setting request, and the correspondence setting request includes a table name of a data table and an access rule name. The database middleware parses the correspondence setting request, and stores the table name of the data table and the access rule name according to the correspondence setting request. If an access rule corresponding to the access rule name is partition access or partition priority access, the correspondence setting request further needs to include a partition key value or a priority key value. If the correspondence setting request includes the partition key value or the priority key value, the partition key value or the priority key value is further stored. In actual application, the correspondence setting request may be specifically an SQL statement. The correspondence setting request may come from a terminal of a system administrator, or may come from client software of the database middleware. This is not limited herein.

The following describes correspondences between the four data tables and the access rules.

Correspondence 1: is a correspondence between the data table and the access rule 1 (rule 1). Because the rule 1 indicates that a replication table is accessed according to the priority routing policy, and the data table is a replication table, in addition to the table name of the data table and the access rule, the correspondence setting request includes the priority key value. Specifically, the customer table shown in Table 1 is a replication table, and the first four bits of the custId field are used as the priority key value of the priority access policy of the replication table. In this case, the correspondence setting request is specifically as follows:
ALTER TABLE tbl_customer USING SHARDRULE rule1
ACCESS PARTITION By (substr(custid, 0, 4))

Correspondence 2: is a correspondence between the data table and the access rule 2 (rule 2). The data table is a partition table, and because the rule 2 indicates that the partition table is accessed according to the partition routing policy, in addition to the table name of the data table and the access rule, the correspondence setting request includes the partition key value. Specifically, the customer relationship order table shown in Table 2 is a partition table, and the first seven bits of the mdn field are used as the partition key value of the partition routing policy of the partition table. In this case, the correspondence setting request is specifically as follows:
ALTER TABLE tbl_cust_order USING SHARDRULE rule2
ACCESS PARTITION By (substr(mdn, 0, 7))

Certainly, if there is another access rule, for example, a multi-write policy, the setting may continue. This is not limited herein.

The database middleware further stores a data table access rule relationship that includes the table name of the data table and the access rule name, and the data table access rule relationship may be stored in a form of a table shown in Table 6. Certainly, the data table access rule relationship may be stored in another form, for example, a file form.

**Table 6**

| **Table name of a data table** | **Access rule name** | **Partition key value of a partition access policy** |
|---|---|---|
| tbl_customer | rule 1 | substr(custid, 0, 4) |
| tbl_cust_order | rule 2 | substr(mdn, 0, 7) |

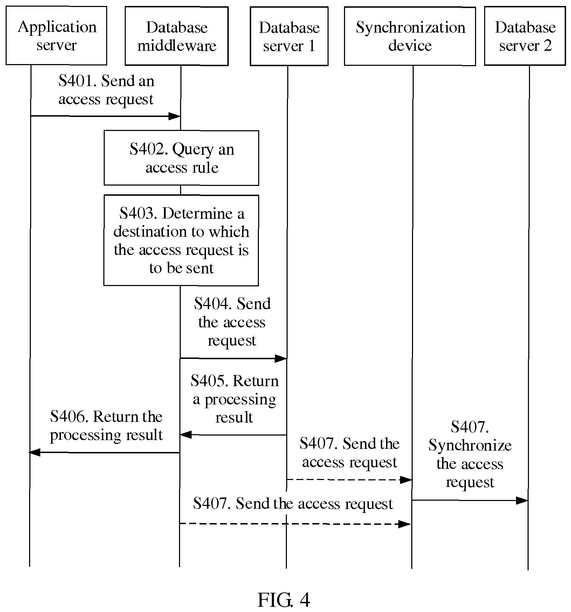

As shown in FIG. 4, a process of accessing a data table provided in an embodiment of the present invention includes the following steps.

S401. An application server sends a data table access request to a database middleware, where the data table access request includes table names of one or more data tables and an access condition.

The access condition herein may include an access action, such as query, delete, add, or modify, or may include some other requirements, such as sorting and merging. This is not limited herein.

The access condition further includes a key value. There are two types of key values: For a replication table, the key value is a priority key value, and it may be learned, by using the priority key value, that the replication table is stored on which database servers, and which database server is preferentially accessed. For a partition table, the key value is a partition key value, and a database server corresponding to the partition key value may be learned by using the partition key value.

S402. The database middleware receives the data table access request, and finds, according to a data table access rule relationship that stores a correspondence between a table name of a data table and a rule name, an access rule name corresponding to the table name of the data table.

For example, for a replication table, an access rule that may be found is an access rule 1. For a partition table, an access rule that may be found is an access rule 2.

S403. The database middleware determines, from access rule content according to a partition key value or a priority key value, a specific database server to which the access request is to be sent, that is, a destination to which the access request is to be sent.

This process is described below in detail.

S404. The database middleware sends the access request to the determined database server.

S405. After receiving the data table access request, the database server processes the data table access request according to the data table access request, and returns a processing result to the database middleware.

S406. After receiving the processing result, the database middleware returns the processing result to the application server.

S407. If the database server actually updates the data table when processing the data table access request, a synchronization device sends the access request to all database servers that store a replication table.

The synchronization device may obtain the access request from the database server that processes the access request, and send the access request to all database servers that store the replication table except the database server that processes the access request. Certainly, the synchronization device may obtain the access request from the database middleware, and send the access request to all the database servers that store the replication table except the database server that processes the access request.

Content of step S403 is subsequently described in detail.

When the access request includes only a table name of one data table, an access rule name of the data table is determined from the access rule content shown in Table 6 according to the table name of the data table. Then, it is determined from the data table access rule relationship shown in Table 5 that the data table is a replication table according to the access rule name and a key value of the data, and the key value is a priority key value. It is determined that a database server corresponding to the foregoing range that is of the priority access interval value and to which the priority key value belongs is a destination to which the access request is to be sent, that is, the access request is to be sent to the determined database server.

When the access request includes only a table name of one data table, an access rule name of the data table is determined from the access rule content shown in Table 6 according to the table name of the data table. Then, it is determined from the data table access rule relationship shown in Table 5 that the data table is a partition table according to the access rule name and a key value of the data, and the key value is a partition key value. It is determined that a database server corresponding to the foregoing range that is of the partition interval value and to which the partition key value belongs is a destination to which the access request is to be sent, that is, the access request is to be sent to the determined database server.

When the access request includes table names of two data tables, access rule names of the two data tables are determined from the access rule content shown in Table 6 according to the table names of the data tables. Then, from the data table access rule relationship shown in Table 5 according to the access rule names and key values of the data tables, it is determined that one data table is a partition table, and a key value corresponding to the partition table is a partition key value; the other data table is a replication table, and a key value corresponding to the replication table is a priority key value. Then, it is determined that a database server corresponding to the foregoing range that is of the priority access partition interval value and to which the partition key value belongs is a destination to which the access request is to be sent. There are two processing manners. Manner 1: Whether the replication table is stored on the determined database server may be subsequently determined by using the data table access rule relationship shown in Table 5. If the replication table is stored on the determined database server, the determined database server is the destination to which the access request is to be sent, that is, the access request is to be sent to the determined database server. If the replication table is not stored on the determined database server, a cross-database association operation needs to be performed. The cross-database association operation is a prior art, and there may be multiple processing manners. For example, the access request is transformed into two or more sub-access requests, each sub-access request is used to alone query only one data table, and then the two or more sub-access requests obtained through transformation are sent to a corresponding database server. Then, the database middleware receives processing results sent by all database servers, and the database middleware performs secondary processing on these processing results, such as merging and sorting, so as to form a final access result. There are many cross-database association operation manners, which are not limited and described herein. The following describes Manner 2: If all the database servers that store the replication table are found from the data table access rule relationship shown in Table 5, and then it is determined that all the database servers that store the replication table include the database server corresponding to the partition key value, the determined database server corresponding to the partition key value is the destination to which the access request is to be sent, that is, the access request is to be sent to the determined database server. If the database server corresponding to the partition key value is not included, the cross-database association operation needs to be performed.

When the access request includes table names of two data tables, access rule names of the two data tables are determined from the data table access rule relationship shown in Table 6 according to the table names of the data tables. If the two access rule names are the same, both the data tables are determined as replication tables from the access rule content shown in Table 5 according to the access rule names and key values of the data tables, and the key values corresponding to the two replication tables are priority key values. If a database server that is preferentially accessed is determined by using any of the priority key values, the determined database server is a destination to which the access request is to be sent, that is, the access request is to be sent to the determined database server. If the two access rules are different, both the data tables are determined as replication tables from the data table access rule relationship shown in Table 5 according to the access rule names and key values of the data tables, and all database servers that store either of the replication tables are separately found. If there are one or more same database servers between all the database servers that store one of the replication tables and all the database servers that store the other of the replication tables, any one of the one or more same database servers is the destination to which the access request is to be sent. If there is no same database server between all the database servers that store one of the replication tables and all the database servers that store the other of the replication tables, a cross-database association operation needs to be performed.

The following uses several specific examples to describe the data table access process. These specific examples are typical application scenarios in the telecommunications field. It should be noted that this embodiment of the present invention is not limited to the telecommunications field.

Scenario 1: A customer registration processing process includes the following operations:
A customer notifies a salesperson in a customer service center of related information, and the salesperson enters customer information on a terminal. The customer information includes an ID card number, a customer name, a customer address, and a customer email, and the salesperson submits the customer information to an application server by using the terminal. Alternatively, in an actual process, a customer may perform self-help registration. In this case, the customer may submit customer information for registration to an application server by using a terminal. The application server generates a customer information insertion request according to the submitted customer information for registration, and an SQL statement of the customer information insertion request may be as follows:
INSERT INTO tbl_customer (custId, custmName, address, ...) Values ('320102198807327436', 'tom', 'Shanghai***street', 'tom@yahoo.com').

The application server sends the customer information insertion request to a database middleware. After receiving the customer information insertion request, the database middleware searches, according to a table name included in the customer information insertion request, for an access rule corresponding to the table name, and may learn from a combination of Table 5 and Table 6 that the access rule of the table is a rule for preferentially accessing a replication table by partition to obtain a partition key value "3201". Then the database middleware learns, according to an access rule rule1 of the replication table, that the SQL statement needs to be sent to a partition PI for processing. The database middleware sends the SQL statement to a database server in the partition PI, and the database server PI inserts the customer data into a customer table. Because data in the replication table is updated, in this case, a synchronization device discovers a customer table data change on a partitioned database server, and synchronously updates the updated data to a database in another partition. In this process, a process in which the database middleware processes the SQL statement is equivalent to processes of steps 402 to 404 and step 406.

Because most customers live and work in a place in which their ID cards are issued, service registration is also performed mainly in the place in which the ID cards are issued. Customers rarely perform service registration in a nonlocal place. If service registration is performed in the nonlocal place, the application server still learns, according to a definition of tbl_customer, that the SQL statement is sent to a database in the place in which the ID card is issued for processing.

Scenario 2: A customer information querying process includes the following operations:
A customer shows ID card information to a salesperson in a customer service center, and the salesperson enters a customer ID card number on a customer query page, and sends a customer query request to an application server. The application server receives the customer query request and generates a query SQL statement, for example,
SELECT custId, custmName, address, ...
FROM tbl_customer
WHERE custId='320102198807327436'

The application server sends the SQL statement to a database middleware.

The database middleware receives the SQL statement, obtains a definition of tbl_customer, and learns, according to the definition of tbl_customer, that the table is a replication table that is preferentially accessed by partition, and a partition key value is substr(custid, 0, 4), so as to obtain a partition key value "3201". Then, the middleware learns, according to a partition routing rule rule1 of the replication table, that the SQL statement needs to be sent to a database server PI for processing. The middleware sends the SQL statement to the database server PI. The database server PI receives the SQL statement, queries a data table according to the SQL statement to obtain customer data with an ID card number of '320102198807327436', and sends the customer data to the database middleware. The database middleware receives the customer data from the database server PI, and sends the customer data to the application server. The application server sends the customer data to a terminal that queries the customer data. The foregoing process in which the database middleware processes the SQL statement is equivalent to processes of steps 402 to 404 and step 406. The foregoing processing process of the database server is equivalent to step 405.

Scenario 3: A mobile number ordering process includes the following operations:
A salesperson uses a terminal to enter, on an order portal page, a mobile number selected by a customer, and the salesperson submits portal page information to a local application server. The application server receives a mobile number order request, and generates an SQL statement, for example, INSERT INTO tbl_custm_order (custmId, mdn, time) VALUES ('320102198807327436', '13770168568', '2015-06-30'). The application server sends the SQL statement to a database middleware. After receiving the SQL statement, the database middleware learns, according to a definition of tbl_custm_order in the SQL statement, that the table is a partition table, and a partition key is substr(mdn, 0, 7), so as to obtain a partition key value "1377016", and then learns, according to a rule rule2 of the partition table tbl_custm_order, that the SQL statement needs to be sent to a database server PI for processing. The database server PI adds this record to a customer relationship table, and returns an order success response to the database middleware. The foregoing process in which the database middleware processes the SQL statement is equivalent to processes of steps 402 to 404 and step 406.

During mobile number ordering, customer information needs to be read, and the read operation is performed alone. Therefore, customer table data in a database in a place in which an ID card is issued is read, and the data is certainly latest data. Mobile number ordering can be processed only in a home location, and a mobile number service is also processed in the home location of the mobile number. Therefore, the data needs to be stored only in the home location of the mobile number, and does not need to be synchronized to another database. In addition, when applying for multiple mobile numbers, a user usually applies for the mobile numbers in advance in a place in which the user's ID card is issued, and there are only a few users who apply for multiple numbers.

There are many specific application scenarios, and examples are not provided again herein.

In this embodiment of the present invention, a problem of performance of updating multiple replication tables can be resolved. As analyzed above, an access request (in particular, a write operation, such as add, delete, and modify) is usually only sent to a database server corresponding to a priority key value for processing, and another replication table is not related. Another partition is used to process the access request only when the database server corresponding to the priority key value is faulty. Therefore, database access performance is greatly improved. After data is updated, the synchronization device updates the updated data to the another replication table, so that a single point of failure problem of updating multiple replication tables is resolved. As analyzed above, according to the partition access priority read/write policy, in a normal case, a write operation is performed only in a data replication table in a place in which a customer ID card is issued. However, when a database in the place in which the ID card is issued is faulty, the middleware randomly selects a replication table on another partition for update, and a service is performed as usual.

Therefore, the single point of failure problem is resolved. Then, the synchronization device updates the updated data to another replication table. Because in most cases, a read/write operation of a telecommunications service customer table is processed in the place in which the customer ID card is issued, latest data can be obtained by performing the read operation, so as to read the data in real time. Even if a customer is on a business trip, if customer table information is read alone, the replication table in the place in which the customer ID card is issued is still read, and the latest data is also obtained. If a mobile number service needs to be processed or a mobile number service needs to be queried in a nonlocal place, a customer table needs to be joined. Although a replication table on a partition in the nonlocal place is read because a nearest-read policy is used in this case, the customer data has been synchronized already because there is an excessively long period of time between a time of performing a registration operation by the customer and a time when the customer is on the business trip. Therefore, basically, a problem that the data cannot be read in real time does not exist. Because a partition routing priority read/write policy is used for the replication table, the database in the place in which the ID card is issued is used when the customer table is queried alone, and a customer quantity in each partition is basically balanced. Therefore, read/write load of each replication table is also basically balanced, thereby resolving a load balance problem. The replication table in the home location of the mobile number is used in a JOIN operation. Because a mobile phone service volume in each partition is basically balanced, load of the JOIN operation is also balanced, and performance is also optimal due to use of the nearest-read policy.

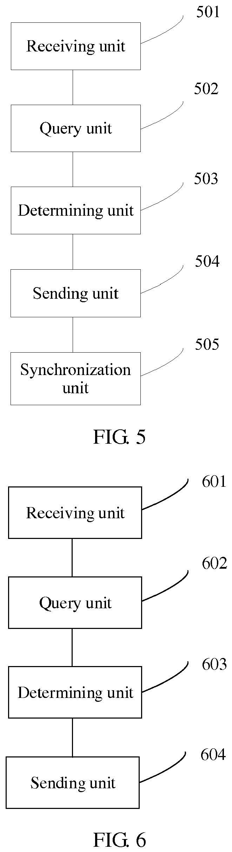

As shown in FIG. 5, an embodiment of the present invention further provides a schematic structural diagram of a distributed data service apparatus. An apparatus 500 includes a receiving unit 501, a query unit 502, a determining unit 503, and a sending unit 504. The receiving unit 501 is configured to receive a first access request sent by an application server, where the first access request includes a table name of the first data table and a key value of the first data table. The query unit 502 is configured to find, according to the table name of the first data table, that the first data table is a replication table and a first access rule corresponding to the replication table. The determining unit 503 is configured to determine a database server that is corresponding to the key value and in the first access rule as a first database server that is preferentially accessed. The sending unit 504 is configured to send the first access request to the first database server. The sending unit 504 is further configured to: determine that the first database server is faulty or is disconnected from a network, and send the first access request to any one of all database servers that store the replication table except the first database server. In addition, the apparatus further includes a synchronization unit 505, configured to: after it is determined that the first database server processes the access request, if data included in the first data table changes, send the first access request to all the database servers that store the replication table except the first database server.

In addition, the receiving unit 501 is further configured to receive a second access request sent by the application server, where the second access request includes a table name of a second data table, a table name of a third data table, and a key value of the second data table. The query unit 502 is further configured to find that the second data table is a partition table and a second access rule of the partition table according to the table name of the second data table, where the partition table is a data table in which data is dispersedly and uniquely stored on multiple database servers according to a partition rule, and the partition table has a same table name and table structure on the multiple database servers. The determining unit 503 is further configured to: determine, according to the key value of the second data table and the second access rule, a second database server that stores a partition table corresponding to the partition key value, find that the second data table is a replication table and a third access rule according to the table name of the third data table, and determine, from the third access rule, that the second database server stores the second data table, or determine, from the third access rule, all database servers that store the second data table. When all the database servers that store the second data table include the second database server, the sending unit 504 is further configured to send the second access request to the second database server.

In this embodiment, the distributed data service apparatus 500 is presented in a form of a function unit. The "unit" herein may refer to an application-specific integrated circuit (application-specific integrated circuit, ASIC), a circuit, a processor and a memory that execute one or more software or firmware programs, an integrated logic circuit, and/or another device that can provide the foregoing function. In a simple embodiment, it may be appreciated by persons skilled in the art that the distributed data service apparatus may use the form shown in FIG. 3. The receiving unit 501, the query unit 502, the determining unit 503, the sending unit 504, and the synchronization unit 505 may be implemented by using the processor and the memory shown in FIG. 3. Specifically, the receiving unit 501, the sending unit 504, and the synchronization unit 505 may be implemented by the processor by performing an interaction module, and the query unit 502 and the determining unit 503 may be implemented by the processor by performing a query module.

As shown in FIG. 6, an embodiment of the present invention further provides a schematic structural diagram of a distributed data service apparatus. An apparatus 600 includes a receiving unit 601, a query unit 602, a determining unit 603, and a sending unit 604. The receiving unit 601 is configured to receive an access request sent by an application server, where the access request includes a table name of a first data table, a table name of a second data table, a key value of the first data table, and a key value of the second data table. The query unit 602 is configured to find, according to the table name of the first data table, that the first data table is a replication table and a first access rule corresponding to the first data table, where the replication table is a same data table stored on multiple database servers. The determining unit 603 is configured to: determine, according to the table name of the second data table, that the second data table is a replication table and a second access rule corresponding to the second data table; and when the first access rule and the second access rule are the same, determine, from the first access rule or the second access rule, a database server corresponding to the key value of the first data table or the key value of the second data table as a first database server that is preferentially accessed. The sending unit 604 is configured to send the first access request to the first database server. In addition, the determining unit 603 is further configured to: when the first access rule and the second access rule are different, determine, from the first access rule, all database servers that store the first data table, and determine, from the second access rule, all database servers that store the second data table; and when determining that there are one or more same database servers in all the database servers that store the first data table and all the database servers that store the second data table, determine any one of the one or more same database servers as a second database server that is preferentially accessed. The sending unit 604 is further configured to send the first access request to the second database server.

In this embodiment, the distributed data service apparatus 600 is presented in a form of a function unit. The "unit" herein may refer to an application-specific integrated circuit (application-specific integrated circuit, ASIC), a circuit, a processor and a memory that execute one or more software or firmware programs, an integrated logic circuit, and/or another device that can provide the foregoing function. In a simple embodiment, it may be appreciated by persons skilled in the art that the distributed data service apparatus may use the form shown in FIG. 3. The receiving unit 601, the query unit 602, the determining unit 603, and the sending unit 604 may be implemented by using the processor and the memory shown in FIG. 3. Specifically, the receiving unit 601 and the sending unit 604 may be implemented by the processor by performing an interaction module, and the query unit 602 and the determining unit 603 may be implemented by the processor by performing a query module.

An embodiment of the present invention further provides a computer storage medium, configured to store a computer software instruction used by the distributed data service apparatus shown in FIG. 5, and the computer software instruction includes a program designed to perform the foregoing method embodiments. The apparatus can access a distributed database by executing the stored program.

An embodiment of the present invention further provides another computer storage medium, configured to store a computer software instruction used by the distributed data service apparatus shown in FIG. 6, and the computer software instruction includes a program designed to perform the foregoing method embodiments. The apparatus can access a distributed database by executing the stored program.

Persons skilled in the art should understand that the embodiments of this application may be provided as a method, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for accessing a distributed database, wherein the method comprises:
receiving a first access request sent by an application server, wherein the first access request comprises a table name of the first data table and a key value of the first data table;
finding, according to the table name of the first data table, that the first data table is a replication table and a first access rule corresponding to the replication table, wherein the replication table is a same data table stored on multiple database servers;
determining a database server that is corresponding to the key value and in the first access rule as a first database server that is preferentially accessed; and
sending the first access request to the first database server.

2. The method according to claim 1, wherein before the sending the first access request to the first database server, the method further comprises:
determining that the first database server is faulty or is disconnected from a network, and sending the first access request to any one of all database servers that store the replication table except the first database server.

3. The method according to claim 1, further comprising: after the first database server processes the access request and data comprised in the first data table changes, sending the first access request to all database servers that store the replication table except the first database server.

4. The method according to any one of claims 1 to 3, further comprising:
receiving a second access request sent by the application server, wherein the second access request comprises a table name of a second data table, a table name of a third data table, and a key value of the second data table;
finding that the second data table is a partition table and a second access rule of the partition table according to the table name of the second data table, wherein the partition table is a data table in which data is dispersedly and uniquely stored on multiple database servers according to a partition rule, and the partition table has a same table name and table structure on the multiple database servers;
determining, according to the key value of the second data table and the second access rule, a second database server that stores a partition table corresponding to the partition key value; and
finding that the second data table is a replication table and a third access rule according to the table name of the third data table, and determining, from the third access rule, that the second database server stores the second data table, or determining, from the third access rule, all database servers that store the second data table; and
when all the database servers that store the second data table comprise the second database server, sending the second access request to the second database server.

5. The method according to claim 1, wherein the access request comprises a query request, a delete request, a modify request, or an add request.

6. A method for accessing a distributed database, wherein the method comprises:
receiving an access request sent by an application server, wherein the access request comprises a table name of a first data table, a table name of a second data table, a key value of the first data table, and a key value of the second data table;
finding, according to the table name of the first data table, that the first data table is a replication table and a first access rule corresponding to the first data table, wherein the replication table is a same data table stored on multiple database servers;
determining, according to the table name of the second data table, that the second data table is a replication table and a second access rule corresponding to the second data table;
when the first access rule and the second access rule are the same, determining, from the first access rule or the second access rule, a database server corresponding to the key value of the first data table or the key value of the second data table as a first database server that is preferentially accessed; and
sending the first access request to the first database server.

7. The method according to claim 6, further comprising:
when the first access rule and the second access rule are different, determining, from the first access rule, all database servers that store the first data table, and determining, from the second access rule, all database servers that store the second data table;
when it is determined that there are one or more same database servers in all the database servers that store the first data table and all the database servers that store the second data table, determining any one of the one or more same database servers as a second database server that is preferentially accessed; and
sending the first access request to the second database server.

8. A distributed data service apparatus, comprising:
a receiving unit, configured to receive a first access request sent by an application server, wherein the first access request comprises a table name of the first data table and a key value of the first data table;
a query unit, configured to find, according to the table name of the first data table, that the first data table is a replication table and a first access rule corresponding to the replication table, wherein the replication table is a same data table stored on multiple database servers;
a determining unit, configured to determine a database server that is corresponding to the key value and in the first access rule as a first database server that is preferentially accessed; and
a sending unit, configured to send the first access request to the first database server.

9. The apparatus according to claim 8, wherein the sending unit is further configured to: determine that the first database server is faulty or is disconnected from a network, and send the first access request to any one of all database servers that store the replication table except the first database server.

10. The apparatus according to claim 8, further comprising:
a synchronization unit, configured to: after it is determined that the first database server processes the access request, if data comprised in the first data table changes, send the first access request to all database servers that store the replication table except the first database server.

11. The apparatus according to claim 8, wherein the receiving unit is further configured to receive a second access request sent by the application server, wherein the second access request comprises a table name of a second data table, a table name of a third data table, and a key value of the second data table;
the query unit is further configured to find that the second data table is a partition table and a second access rule of the partition table according to the table name of the second data table, wherein the partition table is a data table in which data is dispersedly and uniquely stored on multiple database servers according to a partition rule, and the partition table has a same table name and table structure on the multiple database servers;
the determining unit is further configured to: determine, according to the key value of the second data table and the second access rule, a second database server that stores a partition table corresponding to the partition key value, find that the second data table is a replication table and a third access rule according to the table name of the third data table, and determine, from the third access rule, that the second database server stores the second data table, or determine, from the third access rule, all database servers that store the second data table; and
the sending unit is further configured to send the second access request to the second database server when all the database servers that store the second data table comprise the second database server,.

12. A distributed data service apparatus, comprising:
a receiving unit, configured to receive an access request sent by an application server, wherein the access request comprises a table name of a first data table, a table name of a second data table, a key value of the first data table, and a key value of the second data table;
a query unit, configured to find, according to the table name of the first data table, that the first data table is a replication table and a first access rule corresponding to the first data table, wherein the replication table is a same data table stored on multiple database servers;
a determining unit, configured to: determine, according to the table name of the second data table, that the second data table is a replication table and a second access rule corresponding to the second data table; and when the first access rule and the second access rule are the same, determine, from the first access rule or the second access rule, a database server corresponding to the key value of the first data table or the key value of the second data table as a first database server that is preferentially accessed; and
a sending unit, configured to send the first access request to the first database server.

13. The apparatus according to claim 12, wherein:
the determining unit is further configured to: when the first access rule and the second access rule are different, determine, from the first access rule, all database servers that store the first data table, and determine, from the second access rule, all database servers that store the second data table; and when determining that there are one or more same database servers in all the database servers that store the first data table and all the database servers that store the second data table, determine any one of the one or more same database servers as a second database server that is preferentially accessed; and
the sending unit is further configured to send the first access request to the second database server.

14. A distributed data service apparatus, comprising a memory that stores executable program code, a communications interface, and a processor connected to the memory and the communications interface, wherein:
the processor is configured to execute the executable program code, so as to implement the following operations:
receiving a first access request sent by an application server, wherein the first access request comprises a table name of the first data table and a key value of the first data table;
finding, according to the table name of the first data table, that the first data table is a replication table and a first access rule corresponding to the replication table, wherein the replication table is a same data table stored on multiple database servers;
determining a database server that is corresponding to the key value and in the first access rule as a first database server that is preferentially accessed; and
sending the first access request to the first database server.

15. A distributed data service apparatus, comprising a memory that stores executable program code, a communications interface, and a processor connected to the memory and the communications interface, wherein:
the processor is configured to execute the executable program code, so as to implement the following operations:
receiving an access request sent by an application server, wherein the access request comprises a table name of a first data table, a table name of a second data table, a key value of the first data table, and a key value of the second data table;
finding, according to the table name of the first data table, that the first data table is a replication table and a first access rule corresponding to the first data table, wherein the replication table is a same data table stored on multiple database servers;
determining, according to the table name of the second data table, that the second data table is a replication table and a second access rule corresponding to the second data table;
when the first access rule and the second access rule are the same, determining, from the first access rule or the second access rule, a database server corresponding to the key value of the first data table or the key value of the second data table as a first database server that is preferentially accessed; and
sending the first access request to the first database server.
